# EUROPEAN PATENT APPLICATION

(11) **EP 2 520 406 A2**
(43) Date of publication of application: **07.11.2012**
(21) Application number: 12275041.7
(22) Date of filing: 10.04.2012
(51) Int. Cl.: B29C 45/14, B29C 45/16, H04M 1/02, H01Q 1/24

(54) **Communications terminal and method of manufacturing the same**

(30) Priority: 02.05.2011 KR 20110041506
(71) Applicant: Samsung Electro-Mechanics Co., Ltd, Suwon, Gyunggi-Do (KR)
(72) Inventor: Hong, Ha Ryong, Gyunggi-do Suwon, (KR); Lim, Dae Ki, Gyunggi-do Suwon, (KR); Han, Chang Mok, Gyunggi-do Suwon, (KR); Park, Hyun Do, Gyunggi-do Suwon, (KR); Lee, Dae Kyu, Gyunggi-do Suwon, (KR); Cho, Sung Eun, Gyunggi-do Suwon, (KR); Sung, Jae Suk, Gyunggi-do Suwon, (KR); An, Chan Gwang, Gyunggi-do Suwon, (KR); Bae, Sang Woo, Gyunggi-do Suwon, (KR)
(74) Representative: Powell, Timothy John

(57) **Abstract**

There are provided a communications terminal, in which an antenna and a case are integrally formed, and a method of manufacturing the same by injection moulding. The communications terminal includes: a terminal body; a case coupled to the terminal body to form an exterior of the terminal; and an antenna part including an antenna pattern integrally formed with the case and an elastic pin formed at one end of the antenna pattern to be electrically connected to a wireless module provided in the terminal body.

## Description

### CROSS-REFERENCE TO RELATED APPLICATIONS

This application claims the priority of Korean Patent Application No. 10-2011-0041506 filed on May 2, 2011, in the Korean Intellectual Property Office, the disclosure of which is incorporated herein by reference.

### BACKGROUND OF THE INVENTION

### Field of the Invention

The present invention relates to a communications terminal in which an antenna and a case are integrally formed and a method of manufacturing the same.

### Description of the Related Art

Recently, as communications terminals such as global positioning systems (GPSs), personal digital assistants (PDAs), cellular phones, wireless notebook computers, and the like, have been widely used and the portability thereof has been emphasized, slimness and lightness have been required therein. In addition, in order to satisfy these requirements, various technologies for reducing communications terminal volumes, while maintaining various functions thereof, have been developed.

Accordingly, various attempts at reducing communications terminal volumes have been made with respect to antennas, essential components thereof.

Generally, since an external antenna such as a rod antenna or a helical antenna, among communications terminal antennas, protrudes outwardly of the terminal by a predetermined length, miniaturization of a terminal may be difficult and portability thereof may be deteriorated. In addition, an external antenna may be damaged in the case that a communications terminal is dropped.

Unlike the external antenna, in the case of an internal antenna mounted in the communications terminal, a risk of damage thereto may be reduced. However, it may be difficult to miniaturize the communications terminal due to a physical size of the internal antenna.

Therefore, research into a technology of integrally forming an antenna radiator with a terminal case has been actively undertaken. For example, a method of attaching an antenna to a terminal case using an adhesive, a method of molding an antenna film in a case in a mold, and the like, have been suggested. In addition, various methods of electrically connecting an antenna attached to a case and a wireless module of a communications terminal to each other have been suggested.

Particularly, in the case in which a wireless module is formed to have a form of a memory card, the wireless module is detachable from the communications terminal. Therefore, a method of easily electrically connecting a detachable wireless module having the form of a memory card, as described above, to an antenna attached to a case, has been demanded.

### SUMMARY OF THE INVENTION

An aspect of the present invention provides a communications terminal in which an antenna and a case are integrally formed, and a method of manufacturing the same.

Another aspect of the present invention provides a communications terminal in which an antenna, formed integrally with a case, is easily electrically connected to a wireless module, and a method of manufacturing the same.

Another aspect of the present invention provides a communications terminal in which a detachable wireless module, having a form of a memory card, may be electrically connected to an antenna formed integrally with a case, and a method of manufacturing the same.

According to an aspect of the present invention, there is provided a communications terminal including: a terminal body; a case coupled to the terminal body to form an exterior of the terminal; and an antenna part including an antenna pattern integrally formed with the case and an elastic pin formed at one end of the antenna pattern to be electrically connected to a wireless module provided in the terminal body.

The antenna part may include an exposure pad formed at a distal end of the antenna pattern, and the elastic pin may be partially protruded outwardly therefrom.

The elastic pin may be inserted into a pin insertion hole formed in the case and electrically connected to the exposure pad.

The antenna pattern may be embedded within the case, and the exposure pad may be exposed to an inner surface of the case.

The elastic pin may include: a contact part protruded outwardly from the exposure pad; an elastic supporting part connected to the contact part to thereby provide elastic force to the contact part; and a housing receiving the contact part and the elastic supporting part therein.

The elastic supporting part may be formed of a coil spring.

The case may include an outer plate forming an exterior of the terminal, and an inner plate coupled to an inner surface of the outer plate, and the antenna pattern may be interposed between the inner plate and the outer plate.

The exposure pad may be exposed to an inner surface of the inner plate.

The wireless module may be detachable from the terminal body.

The wireless module may be detached from the terminal body in a sliding scheme.

The inner plate and the outer plate may be formed of the same material.

According to another aspect of the present invention, there is provided a method of manufacturing a communications terminal, the method including: preparing a primary injection molding product in which an antenna pattern is coupled to an inner plate; coupling an elastic pin to the inner plate to be electrically connected to the antenna pattern of the primary injection molding product; and forming an outer plate on one surface of the primary injection molding product.

The preparing of the primary injection molding product may include: disposing the antenna pattern in a first mold; and forming the inner plate by injecting a resin into the first mold.

The elastic pin may include a contact part elastically contacting the outside, and the coupling of the elastic pin to the inner plate may include allowing the contact part to be protruded outwardly while penetrating through the antenna pattern.

The forming of the outer plate on one surface of the primary injection molding product may include: disposing the primary injection molding product in a second mold; and forming the outer plate while covering the antenna pattern by injecting a resin into the second mold.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a partially cut-away perspective view of a communications terminal according to an embodiment of the present invention;
FIG. 2 is a partially exploded perspective view of the communications terminal shown in FIG. 1;
FIG. 3 is a cross-sectional view taken along line B-B' of FIG. 2;
FIG. 4 is a perspective view and a cross-sectional view schematically showing an elastic pin according to an embodiment of the present invention;
FIGS. 5A through 5D are views describing a method of manufacturing a communications terminal according to an embodiment of the present invention; and
FIGS. 6A and 6B are views describing a contact structure between an antenna part and a wireless module according to an embodiment of the present invention.

### DETAILED DESCRIPTION OF THE PREFERRED EMBODIMENT

Prior to a detailed description of the present invention, the terms or words, which are used in the specification and claims to be described below, should not be construed as having typical or dictionary meanings. The terms or words should be construed in conformity with the technical idea of the present invention on the basis of the principle that the inventor(s) can appropriately define terms in order to describe his or her invention in the best way. Embodiments described in the specification and structures illustrated in drawings are merely exemplary embodiments of the present invention. Thus, it is intended that the present invention covers the modifications and variations of this invention, provided they fall within the scope of their equivalents at the time of filing this application.

Exemplary embodiments of the present invention will be described in detail with reference to the accompanying drawings. The same reference numerals will be used throughout to designate the same or like elements in the accompanying drawings. Moreover, detailed descriptions related to well-known functions or configurations will be ruled out in order not to unnecessarily obscure subject matters of the present invention. In the drawings, the shapes and dimensions of some elements may be exaggerated, omitted or schematically illustrated. Also, the size of each element does not entirely reflect an actual size.

Hereinafter, embodiments of the present invention will be described in detail with reference to the accompanying drawings.

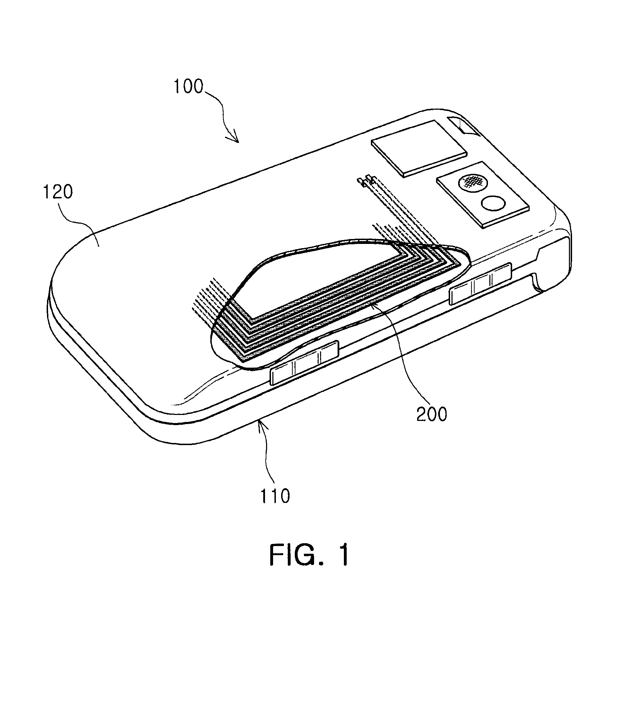

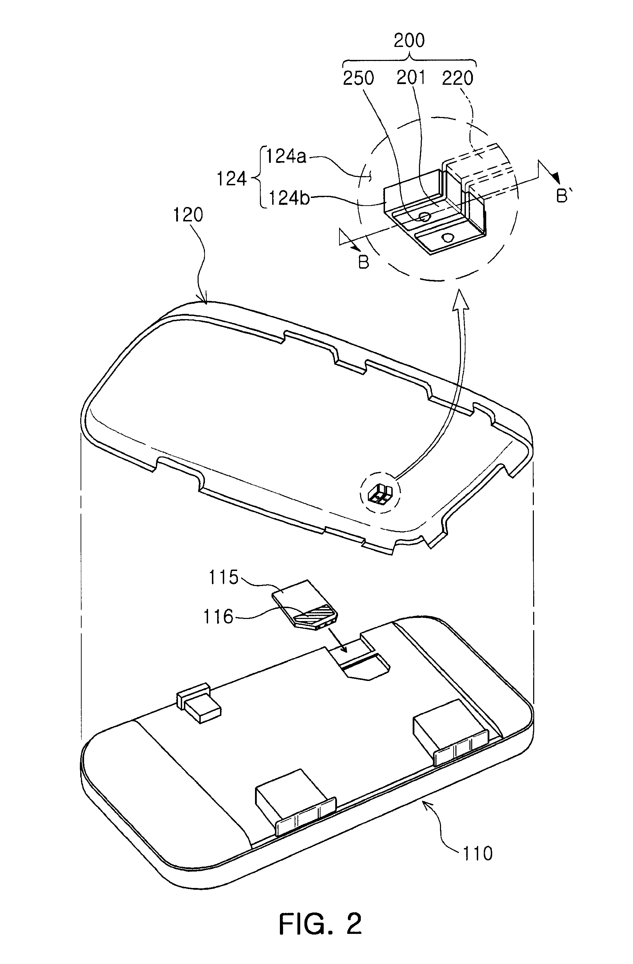

FIG. 1 is a partially cut-away perspective view of a communications terminal according to an embodiment of the present invention; and FIG. 2 is a partially exploded perspective view of the communications terminal shown in FIG. 1.

Referring to FIGS. 1 and 2, a communications terminal 100 according to an embodiment of the present invention may include a terminal body 110, an antenna part 200, and a cover 120.

The terminal body 110 may be formed by coupling main components of the communications terminal 100 to each other, and perform main functions of the communications terminal. To this end, the terminal body 110 may include a wireless module 115 therein.

The wireless module 115 may transceive electrical signals and perform wireless communications with the outside. The wireless module 115 may be mounted on a circuit board, or the like, provided in the communications terminal and may be fixedly attached to the circuit board, and have memory card form to be insertedly fixed into a card insertion space formed in the terminal body 110 as shown in FIG. 2.

In addition, the wireless module 115 may include connection terminals 116 for electrically connecting the wireless module 115 and the antenna part 200 to be described below to each other.

The cover 120 may form a portion of a case of the communications terminal 100 and may be coupled to the terminal body 110 to complete the communications terminal. The cover 120 may be a battery cover 120, provided in order to allow for the separation of a battery (not shown) from the terminal body 110 or to exchange the battery. However, the cover 120 according to the embodiment of the present invention is not limited thereto, but may be variously applied to any case forming the communications terminal 100.

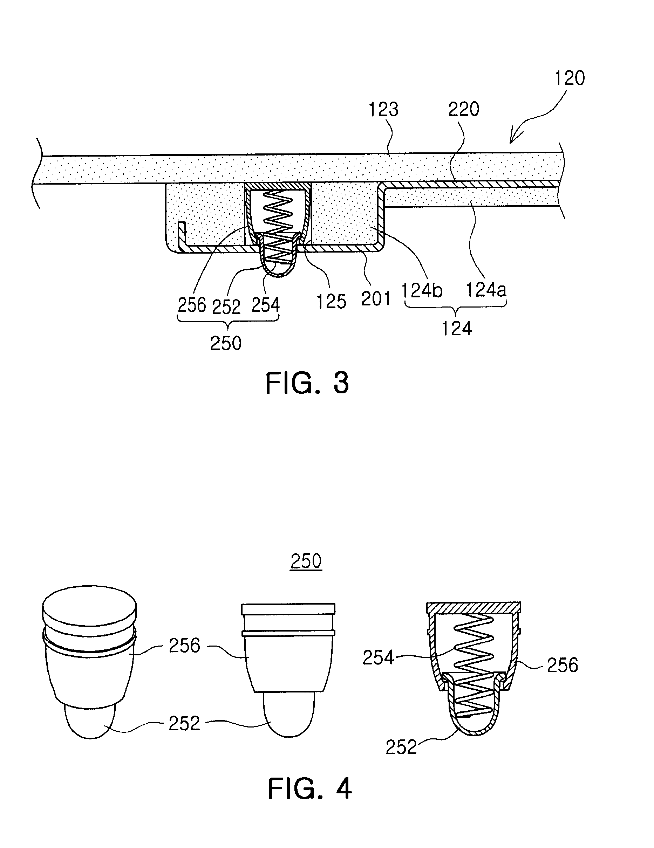

FIG. 3 is a cross-sectional view taken along line B-B' of FIG. 2.

Referring to FIG.3, the cover 120 according to the embodiment of the present invention may include an outer plate 123 and an inner plate 124.

The outer plate 123 which forms an exterior of the cover may be formed to have a generally flat plate shape. A specific shape of the outer plate 123 may correspond to the exterior of the communications terminal 100.

The inner plate 124 may be formed in an inner surface of the outer plate 123 to reinforce a thickness (that is, rigidity) of the cover 120. Further, the inner plate 124 may include a plate part 124a having an antenna pattern 220 disposed therein and a pin insertion part 124b having an exposure pad 201 formed therein.

Here, a thickness of the pin insertion part 124b may be greater than that of the plate part 124a. This configuration has been derived since an elastic pin 250 to be described below may be inserted into the pin insertion part 124b of the inner plate 124.

That is, the pin insertion part 124b of the inner plate 124 may have a size corresponding to that of the elastic pin 250. Therefore, in the case in which the elastic pin 250 is small, the thickness of the pin insertion part 124b may be identical to that of the plate part 124a. In the case in which the plate part 124a is thick, the pin insertion part 124b may have the same thickness as that of the plate part 124a.

The pin insertion part 124b may have a pin insertion hole 125 formed therein. The pin insertion hole 125 may have an elastic pin 250 to be described below insertedly fixed therein. Therefore, the size and shape of the pin insertion hole 125 may correspond to an exterior of the elastic pin 250, and the pin insertion hole 125 may be formed at a position corresponding to that of a through-hole 202 of the exposure pad 201 to be described below.

Meanwhile, the pin insertion hole 125 may have an inner diameter equal to or slightly smaller than an outer diameter of the elastic pin 250 to be described below. In this case, the elastic pin 250 may be fitted into the pin insertion hole 125 and may be coupled to the pin insertion part 124b. However, the present invention is not limited thereto.

In addition, the cover 120 according to the present embodiment may include the antenna part 200 interposed between the inner plate 124 and the outer plate 123.

The antenna part 200 may include the antenna pattern 220 and the elastic pin 250.

The antenna pattern 220 may only be formed of a metal radiator having a specific pattern or be formed to have an insulation layer on an outer portion of the metal radiator as needed. In addition, the antenna pattern may also be formed by using a metal pattern formed on a flexible film.

Therefore, the antenna pattern 220 according to the present embodiment may be formed by pressing a thin metal plate and be formed by using a metal pattern on a film (for example, a flexible substrate, or the like) by a sputtering method, a printing method, a plating method, a stamping method, a drawing method, a dispensing method, or the like.

This antenna pattern 220 may be formed of copper, aluminum, or the like, and have a plating layer formed on an upper surface thereof. Here, the plating layer is formed of nickel, gold, or the like.

In addition, a plurality of exposure pads 201 may be formed at ends of the antenna pattern 220 to correspond to positions of the connection terminals 116 of the wireless module 115 described above. The exposure pad 201 according to the present embodiment may be formed at the ends of the antenna pattern 220 and include at least one through-hole 202 formed therein.

This through-hole 202 may be disposed to correspond to the pin insertion hole 125 of the pin insertion part 124b as described above.

The antenna pattern 220, with the exception of the exposure pad 201, may be interposed between the outer plate 123 and the inner plate 124. Therefore, the antenna pattern 220 is disposed in an inner portion of the cover 120, such that the antenna pattern 220 is not exposed to the outside.

The elastic pin 250 may be inserted into the pin insertion hole 125 to electrically connect the connection terminals 116 of the wireless module 115 and the antenna pattern 220 to each other.

FIG. 4 is a perspective view and a cross-sectional view schematically showing an elastic pin according to the present embodiment. Referring to FIG. 4, the elastic pin 250 according to the present embodiment may include a contact part 252, an elastic supporting part 254, and a housing 256.

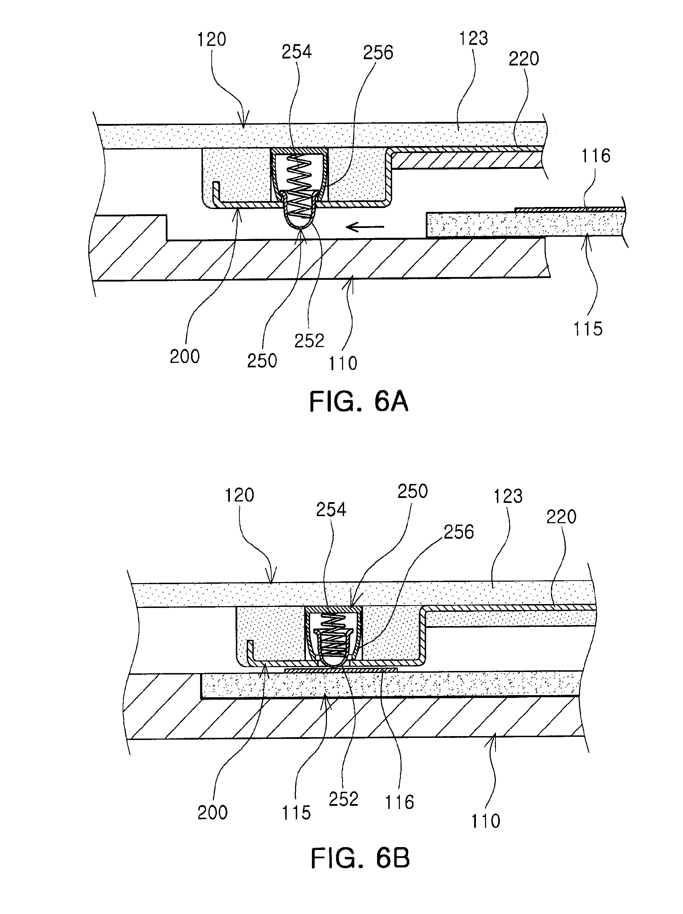

The contact part 252, protruded outwardly to contact the outside, that is, the connection terminal 116, may have a tip shape. According to the present embodiment, a lower surface of the contact part 252 may be formed as a smooth curved surface so that the contact part 252 may be easily inserted into the housing 256 when it contacts the wireless module 115 inserted from the side of the communications terminal, as shown in FIGS. 6A and 6B.

The elastic supporting part 254 may be provided in order to provide elastic force to the contact part 252. To this end, the elastic supporting part 254 may be a coil spring having one end connected to the contact part 252 and the other end contacting an inner surface of the housing 256. However, the elastic supporting part 254 according to the embodiment of the present invention is not limited thereto. That is, various elastic providing devices such as a leaf spring, a torsion spring, and the like, may be used as long as they may provide elastic force to the contact part 252.

The housing 256 may receive the contact part 252 and the elastic supporting part 254 therein and protect the contact part 252 and the elastic supporting part 254 form the outside. Therefore, the housing 256 may have various shapes according to a shape or a structure of the contact part 252 and the elastic supporting part 254.

All of the contact part 252, the elastic supporting part 254, and the housing 256 of the elastic pin 250 may be formed of a metal material having high electric conductivity. In addition, when the elastic pin 250 is inserted into the pin insertion hole 125, the housing 256 of the elastic pin 250 may contact an inner surface of the exposure pad 201 to be electrically connected to the exposure pad 201.

Therefore, the elastic pin 250 may have a conductive line formed through the contact part 252, the elastic supporting part 254, and the housing 256 to electrically connect the connection terminal 116 (See FIG. 6B) contacting the contact part 252 and the exposure pad 201 contacting the housing 256 to each other.

The elastic pin 250 configured as described above may be maintained in a state in which the contact part 252 is basically protruded outwardly due to the elastic force provided by the elastic supporting part 254. The contact part 252 in this state may be protruded outwardly of the exposure pad 201 while penetrating through the through-hole 202 of the exposure pad 201.

In addition, in the case in which external force stronger than the elastic force is applied to the contact part 252, the contact part 252 may be inserted into the housing 256 (or into the exposure pad) while pressing the elastic supporting part 254.

Meanwhile, the elastic pin 250 according to the embodiment of the present invention is not limited to the above-mentioned configuration. That is, any device capable of being protruded outwardly of the exposure pad 201 and elastically moving by external force may be used.

Next, a method of manufacturing a communications terminal according to an embodiment of the present invention will be described in detail. The configuration of the communications terminal 100 described above will be further clear from the following description of a method of manufacturing a communications terminal.

In the communications terminal 100 according to the present embodiment, the antenna part 200 and the cover 120 are manufactured to be integrally formed. Therefore, a description of a general method of manufacturing a communications terminal will be omitted, and a method of integrally manufacturing a cover 120 and an antenna 200 will be mainly described.

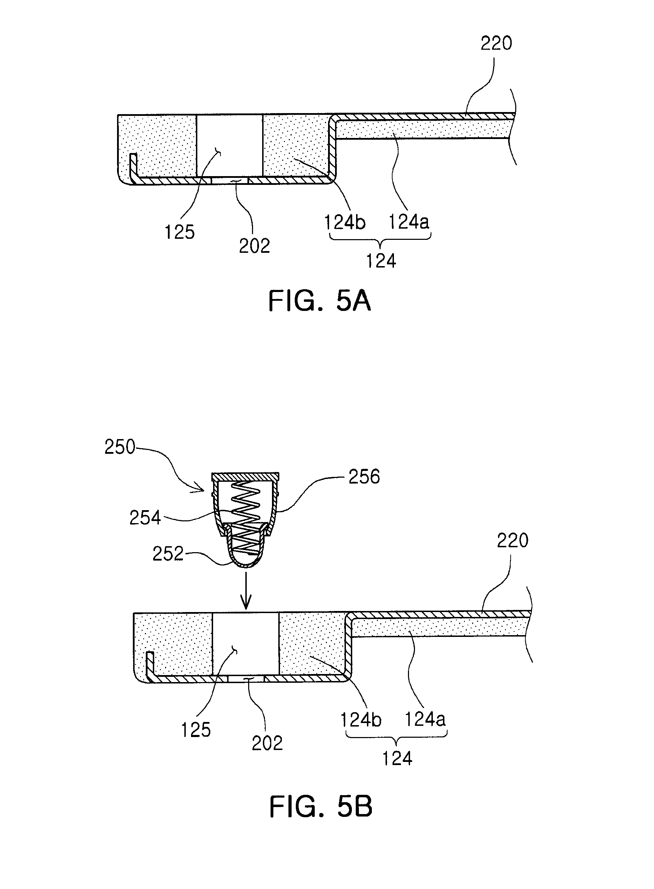

FIGS. 5A through 5D are views describing a method of manufacturing a communications terminal according to the embodiment of the present invention.

Referring to FIG. 5A through 5D, in the method of manufacturing the communications terminal 100 according to the present embodiment, as shown in FIG. 5A, the antenna pattern 220 may be coupled to the inner plate 124. This operation may be performed by disposing the antenna pattern 220 in a first mold (not shown) having the shape of the inner plate 124 formed therein and then injecting a resin thereinto.

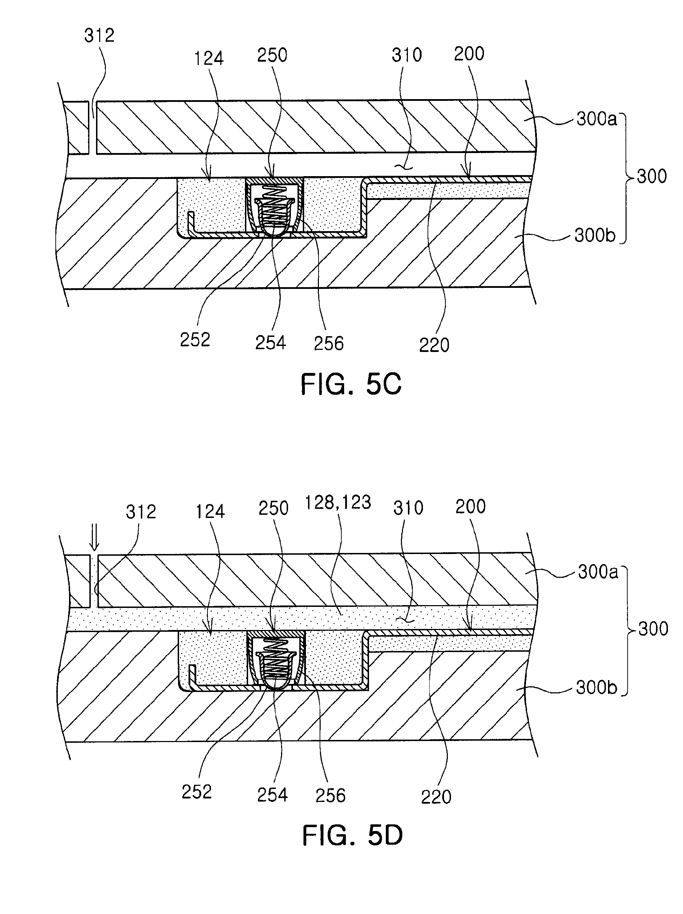

Therefore, a primary injection molding product in which the antenna pattern 220 is coupled to the inner plate 124 is formed. Meanwhile, the first mold may have a similar structure to that of a second mold 300 (See FIG. 5C) to be described below and is different from the second mold only in that an internal space thereof has a shape corresponding to that of the primary injection molding product.

Next, as shown in FIG. 5B, the elastic pin 250 may be coupled to the pin insertion hole 125 formed in the inner plate 124. As described above, the elastic pin 250 may be fitted into the pin insertion hole 125.

However, the present invention is not limited thereto. That is, a method of fixing the elastic pin 250 by shielding an inlet of an upper end of the pin insertion hole 125, into which the elastic pin 250 is inserted, using a separate shielding member (not shown) may be also used. Here, the shielding member may be connected to the antenna pattern 220 using a conductive member (for example, a solder paste, or the like). In this case, since the elastic pin 250 may be electrically connected to the antenna pattern 220 by the shielding member as well as an exposure pad 201, the reliability of connection may be secured.

In addition, according to the embodiment of the present invention, the elastic pin 250 may be fixedly inserted into the pin insertion hole 125 by various methods such as a method of fixing the elastic pin 250 by filling a filling material such as a resin in an inner wall of the pin insertion hole 125.

After the primary injection molding product is completed, an adhesive layer may be applied to the primary injection molding product. The adhesive layer may be formed by applying an adhesive such as a hot melt adhesive to an upper surface of the inner plate 124 or attaching an adhesive sheet thereto.

This adhesive layer may be provided to firmly adhere the inner plate 124 and the outer plate 123 to each other. Meanwhile, in the case in which the inner plate 124 and the outer plate 123 are formed of the same material, the inner plate 124 and the outer plate 123 may be firmly adhered to each other even without a separate adhesive layer. Therefore, in this case, the adhesive layer may be omitted. That is, the adhesive layer may be selectively formed according to a material, or the like, of the inner plate 124 and the outer plate 123.

Then, as shown in FIG. 5C, the primary injection molding product may be disposed in the second mold 300. The second mold 300 may have the shape of the cover 120 formed therein.

The second mold 300 may include an upper mold 300a and a lower mold 300b. An internal space 310 having the shape of the cover 120 may be formed in the second mold 300 by the upper and lower molds 300a and 300b. The primary injection molding product according to the present embodiment may be disposed in the internal space 310.

Meanwhile, the lower mold 300b on which the primary injection molding product is seated may have an inner surface formed such that the pin insertion part 124b of the primary injection molding product is inserted thereinto while being firmly closely adhered thereto. Therefore, during a resin injection process to be described below, a resin injected into the second mold 300 does not flow in a lower surface of the pin insertion part 124b, thereby preventing a problem in the driving of the elastic pin 250 in the case in which the resin flows in the pin insertion hole 125.

In addition, the second mold 300 may include an introduction path 312 through which a molding material, that is, the resin, injected from the outside moves to the internal space of the second mold 300.

After the primary injection molding product is seated in the internal space 310 of the second mold 300, as shown in FIG. 5D, a resin 128 may be injected into the second mold 300 through the introduction path 312 to complete the cover 120. Here, the resin 128 injected into the mold 300 forms the outer plate 123 while covering the antenna pattern 220 on the primary injection molding product.

Therefore, as shown in FIG. 3, the outer plate 123 may be formed on the upper portions of the inner plate 124 and the antenna pattern 220. Therefore, the cover 120, a final injection molding product, having the antenna pattern 220 interposed between the inner plate 124 and the outer plate 123, may be formed.

Meanwhile, the inner plate 124 and the outer plate 123 may be formed of the same material. In this case, the completed cover 120 may be integrally formed such that a boundary between the inner plate 124 and the outer plate 123 may not be readily distinguished.

However, the present invention is not limited thereto, but may be variously applied as needed. That is, the inner plate 124 and the outer plate 123 may be formed of different materials.

Next, a contact structure between an antenna part and a wireless module according to the present embodiment is as follows.

FIGS. 6A and 6B are views describing a contact structure between an antenna part and a wireless module according to the embodiment of the present invention.

As described above, the wireless module 115 according to the present embodiment may have the form of the memory card to be insertedly fixed to the terminal body 110 in a sliding scheme.

FIG. 6A shows a point in time at which the wireless module 115 enters the terminal body 110 while being slid. During this operation, the elastic pin 250 may be maintained in a state in which the contact part 252 is protruded outwardly by as much as possible.

Then, as shown in FIG. 6B, when the wireless module 115 is completely inserted into the circuit board, the contact part 252 of the elastic pin 250 is pushed upwardly by the wireless module 115. In this case, since the contact part 252 is continuously applied with downward force by the elastic supporting part 254, the contact part 252 may firmly contact the connection terminal 116 of the wireless module 115 to be electrically connected thereto.

Therefore, the wireless module 115 is electrically connected to the antenna pattern 220, such that it may perform wireless transceiving through the antenna part 20 integrally 0 formed with the cover 120.

As set forth above, in the case of the communications terminal according to the embodiment of the present invention, since the antenna pattern is embedded in the cover during a process of injecting the cover, a process of separately manufacturing an antenna pattern and then coupling the antenna pattern to a communications terminal as in the related art, or the like, may be omitted.

In addition, the antenna pattern according to the embodiment of the present invention may be electrically connected to the wireless module using the elastic pin. Therefore, even in the case that a detachable wireless module is inserted into the terminal body in a sliding scheme, the wireless module and the antenna pattern may be easily electrically connected to each other.

This configuration may be easily applied to a relatively large low frequency antenna. That is, a large low frequency antenna pattern may be embedded in the cover or the case of the communications terminal, and the wireless module may be inserted into the communications terminal to be used as necessary.

In addition, the present invention may be usefully applied to a communications terminal, in which a wireless module is fixedly embedded and a cover coupled to an antenna part is opened and closed, as well as to a communications terminal including a detachable wireless module.

Meanwhile, the communications terminal and the method of manufacturing the same according to the embodiment of the present invention are not limited to the above-mentioned embodiments, but may be variously applied. Although the antenna pattern is embedded in the cover integrated with the cover by way of example in the foregoing embodiment, the present invention is not limited thereto. That is, the antenna pattern may be easily applied to any position of the case forming the terminal body, including the cover.

In addition, although the antenna pattern is embedded within the cover by way of example in the foregoing embodiment, the present invention is not limited thereto, but may be variously applied. For example, the antenna pattern may be attached to one surface of the cover.

Further, although the antenna is included in the communications terminal by way of example in the foregoing embodiment, the present invention is not limited thereto, but may be widely applied to all electronic devices including the antenna.

While the present invention has been shown and described in connection with the embodiments, it will be apparent to those skilled in the art that modifications and variations can be made without departing from the spirit and scope of the invention as defined by the appended claims.

## Claims

1. A communications terminal comprising:
a terminal body;
a case coupled to the terminal body to form an exterior of the terminal; and
an antenna part including an antenna pattern integrally formed with the case and an elastic pin formed at one end of the antenna pattern to be electrically connected to a wireless module provided in the terminal body.

2. The communications terminal of claim 1, wherein the antenna part includes an exposure pad formed at a distal end of the antenna pattern, and
the elastic pin is partially protruded outwardly therefrom.

3. The communications terminal of claim 2, wherein the elastic pin is inserted into a pin insertion hole formed in the case and is electrically connected to the exposure pad.

4. The communications terminal of claim 2, wherein the antenna pattern is embedded within the case, and
the exposure pad is exposed to an inner surface of the case.

5. The communications terminal of claim 2, wherein the elastic pin includes:
a contact part protruded outwardly from the exposure pad;
an elastic supporting part connected to the contact part to thereby provide elastic force to the contact part; and
a housing receiving the contact part and the elastic supporting part therein.

6. The communications terminal of claim 5, wherein the elastic supporting part is formed of a coil spring.

7. The communications terminal of claim 2, wherein the case includes:
an outer plate forming an exterior of the terminal; and
an inner plate coupled to an inner surface of the outer plate,
wherein the antenna pattern is interposed between the inner plate and the outer plate.

8. The communications terminal of claim 7, wherein the exposure pad is exposed to an inner surface of the inner plate.

9. The communications terminal of claim 1, wherein the wireless module is detachable from the terminal body.

10. The communications terminal of claim 9, wherein the wireless module is detached from the terminal body in a sliding scheme.

11. The communications terminal of claim 7, wherein the inner plate and the outer plate are formed of the same material.

12. A method of manufacturing a communications terminal, the method comprising:
preparing a primary injection molding product in which an antenna pattern is coupled to an inner plate;
coupling an elastic pin to the inner plate to be electrically connected to the antenna pattern of the primary injection molding product; and
forming an outer plate on one surface of the primary injection molding product.

13. The method of claim 12, wherein the preparing of the primary injection molding product includes:
disposing the antenna pattern in a first mold; and
forming the inner plate by injecting a resin into the first mold.

14. The method of claim 12, wherein the elastic pin includes a contact part elastically contacting the outside, and
the coupling of the elastic pin to the inner plate includes allowing the contact part to be protruded outwardly while penetrating through the antenna pattern.

15. The method of claim 12, wherein the forming of the outer plate on one surface of the primary injection molding product includes:
disposing the primary injection molding product in a second mold; and
forming the outer plate while covering the antenna pattern by injecting a resin into the second mold.
